# EUROPÄISCHE PATENTANMELDUNG

(11) **EP 0 973 088 A2**
(43) Veröffentlichungstag der Anmeldung: **19.01.2000**
(21) Anmeldenummer: 99440194.1
(22) Anmeldetag: 13.07.1999
(51) Int. Cl.: G06F 1/32, H04N 7/64

(54) **Empfänger eines Telekommunikationsnetzes**

(30) Priorität: 16.07.1998 DE 19831942
(71) Anmelder: ALCATEL, 75008 Paris (FR)
(72) Erfinder: Wannenmacher, Stefan, Dr., 75395 Ostelsheim (DE); Beller, Dieter, 70825 Korntal-Münchingen (DE)
(74) Vertreter: Menzietti, Domenico, Dipl.-Ing

(57) **Zusammenfassung**

Der erfindungsgemäße Empfänger (EMP) ist insbesondere dadurch gekennzeichnet, daß er eine Steuereinheit (CTRL) beinhaltet, mittels derer die Leistungsaufnahme einzelner Module (1', 2', 3', 4', 5', 6', 7', 8') des Empfängers (EMP) nach Bedarf reduziert oder auf einen vorgegebenen Wert eingestellt werden kann. In einem Leistungssparmodus werden nur bestimmte Module (1', 2', 3', 4', 5', 6', 7', 8') des Empfängers (EMP), die zur Detektion einer vorgegebenen Kennung notwendig sind, nur für bestimmte Zeiträume mit Strom versorgt, um in diesen Zeiträumen den empfangenen Datenstrom zu überwachen. Detektiert der Empfänger (EMP) in einem vorgegebenen Abschnitt eine vorgegebene Kennung, so schaltet er auf Normalbetrieb, um auch die verbliebenen Module mit Strom zu versorgen und Empfänger-spezifische Daten zu empfangen. In den Zeiträumen zwischen den vorgegebenen Zeiträumen sind im Leistungsparmodus alle Module (1', 2', 3', 4', 5', 6', 7', 8') z.B. ohne Betriebsspannung.

## Beschreibung

Die Erfindung bezieht sich auf einen Empfänger eines Telekommunikationsnetzes gemäß dem Oberbegriff des Patentanspruchs 1.

In der Firmenzeitschrift Alcatel Telecom Rundschau, 3. Quartal 1996, ist auf den Seiten 196 bis 200 ein Telekommunikationsnetz beschrieben. Das Telekommunikationnetz ist als hybrides Glasfaser/Koaxialkabelnetz aufgebaut und dient der Übertragung von analogen Fernsehsignalen und digitalen Signalen, z.B. für Telefonie, Video-on-Demand, Pay-per-Channel, Tele-Learning etc.. Von einem Sender aus, einem sog. Server oder einer sog. Kopfstation, werden die digitalen Signale über ein Verteilnetz aus optischen Glasfaserleitungen und daran anschließende Verteilnetze aus Koaxialkabeln zu einer Vielzahl von Empfängern übertragen. Als Empfänger werden z.B. sog. Set-Top Boxen verwendet. Die Übertragung der digitalen Signale erfolgt z.B. im MPEG Format; MPEG = Motion Picture Expert Group.

Die Speisung der Empfänger erfolgt z.B. über eine Fernspeisung über das Telekommunikationnetz oder über eine separate, vom Telekommunikationnetz unabhängigen Stromversorgungsleitung. In der Regel ist eine Notstromversorgung vorgesehen, zumindest für die Speisung mindestens eines Telefons je Empfänger. Die Notstromversorgung erfolgt z.B. über eine Batterie. Insbesondere bei der Notstromversorgung, aber auch bei der Fernspeisung steht nur eine begrenzte Kapazität pro Empfänger zur Verfügung.

Es ist daher Aufgabe der Erfindung den Stromverbrauch in den Empfängern zu minimieren.

Gelöst wird diese Aufgabe durch einen Empfänger gemäß Patentanspruch 1. Dieser Empfänger ist insbesondere dadurch gekennzeichnet, daß er eine Steuereinheit beinhaltet, mittels derer die Leistungsaufnahme einzelner Module des Empfängers nach Bedarf reduziert oder auf einen vorgegebenen Wert eingestellt werden kann, z.B. wird die Betriebsspannung für einzelne Module nach Bedarf an- oder abgeschaltet oder es wird die Taktversorgung einzelner Module zur Steuerung ihrer Leistungsaufnahme ab- oder angeschaltet oder es wird die Taktgeschwindigkeit reduziert oder beschleunigt. In einem Leistungssparmodus werden z.B. nur bestimmte Module des Empfängers, die zur Detektion einer vorgegebenen Kennung notwendig sind, nur für bestimmte Zeiträume mit Strom versorgt, um in diesen Zeiträumen den empfangenen Datenstrom zu überwachen. Detektiert der Empfänger in einem vorgegebenen Abschnitt eine vorgegebene Kennung, so schaltet er auf Normalbetrieb, um auch die verbliebenen Module mit Strom zu versorgen und Empfänger-spezifische Daten zu empfangen. In den Zeiträumen zwischen den vorgegebenen Zeiträumen sind im Leistungsparmodus alle Module z.B. ohne Betriebsspannung. Die Strom- und/oder Spannungsversorgung wird somit für einzelne Module in Abhängigkeit von der Zeit und den empfangenen Signalen derart beeinflußt, daß der Empfänger zu Zeitpunkten, in denen für den Empfänger keine relevanten Daten übertragen werden, der Empfänger mit minimalem Stromverbrauch arbeitet und zu Zeitpunkten, in denen für den Empfänger relevante Daten übertragen werden, der Empfänger den nötigen Strom erhält, der für eine einwandfreie Betriebsweise erforderlich ist.

In der Regel sind die Zeiträume, in denen ein Empfänger für ihn relevante Daten empfängt kürzer als die Zeiträume, in denen er keine relevanten Daten empfängt. Dies bedeutet, daß in letzteren Zeiträumen aufgrund des Leistungssparmodus der Stromverbrauch um ein Vielfaches gegenüber einer ununterbrochenen Betriebsbereitschaft gesenkt wird.

Vorteilhafte Ausgestaltungen der Erfindung sind den abhängigen Ansprüchen zu entnehmen.

Ein Ausführungsbeispiel der Erfindung wird im folgenden unter Zuhilfenahme der Figuren 1 bis 7 erläutert. Es zeigen:
- Fig. 1: eine schematische Darstellung eines Telekommunikationssystems,
- Fig. 2: eine schematische Darstellung eines Senders des Telekommunikationssystems aus Fig. 1,
- Fig. 3: eine schematische Darstellung eines Empfängers des Telekommunikationssystems aus Fig. 1,
- Fig. 4: einen Ausschnitt eines Datenstroms,
- Fig. 5: einen weiteren Ausschnitt eines Datenstroms,
- Fig. 6: einen schematisch dargestellten Aufbau eines erfindungsgemäßen Empfängers und
- Fig. 7: eine detailliertere Darstellung des erfindungsgemäßen Empfängers aus Fig. 6.

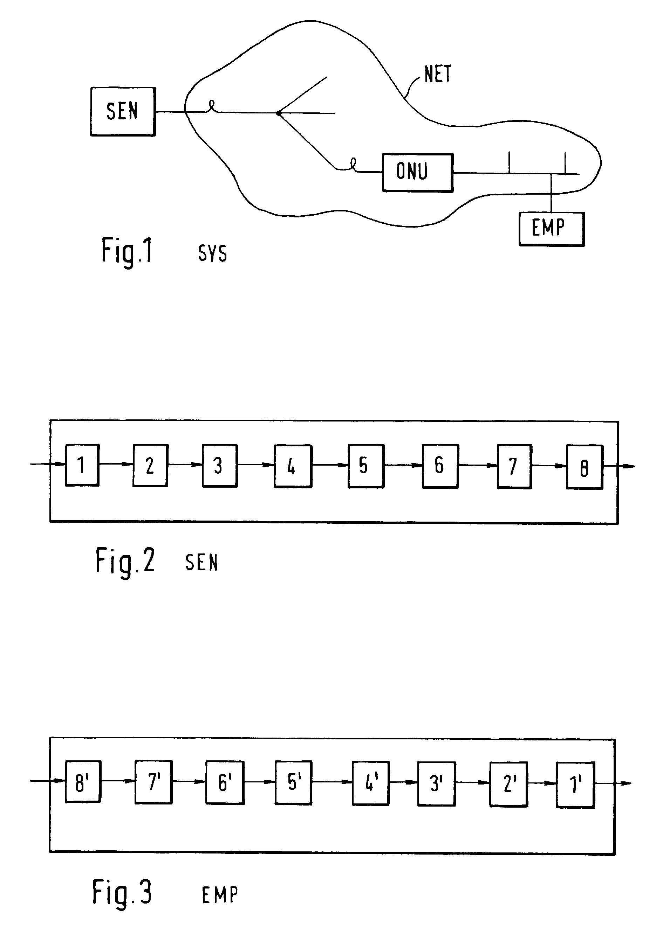

Das Ausführungsbeispiel wird zunächst unter Zuhilfenahme von Fig. 1 beschrieben. Fig. 1 zeigt ein Telekommunikationssystem SYS. Das Telekommunikationssystem SYS beinhaltet mindestens einen Sender SEN, von denen aus Gründen der Übersichtlichkeit nur einer dargestellt ist, eine Vielzahl von Empfängern EMP, von denen ebenfalls aus Gründen der Übersichtlichkeit nur einer dargestellt ist, und ein Telekommunikationsnetz NET. Ein Datenstrom, beinhaltend Empfänger-spezifische Daten, z.B. aus den Bereichen Bildtelefonie, Internet, Video-on-Demand, etc., wird von einem Sender SEN, der z.B. als Server ausgebildet ist, über das Telekommunikationsnetz NET, das z.B. als Verteilnetz mit Rückkanal ausgebildet ist, zu allen Empfängern EMP, die z.B. als Set-Top Boxen oder Cable Modems ausgebildet sind, übertragen.

Das Telekommunikationsnetz NET ist beispielsweise als hybrides Faser/Koaxialkabelnetz ausgebildet. Der Sender SEN ist über eine optische Glasfaserleitung über zumindest einen optischen Splitter und weitere optischen Glasfaserleitungen mit einer Vielzahl von optischen Netzabschlußeinheiten ONU verbunden, von denen aus Gründen der Übersichtlichkeit ebenfalls nur eine dargestellt ist. Jede optische Netzabschlußeinheit ONU ist wiederum über Koaxialkabel mit mehreren Empfängern EMP verbunden.

Das Ausführungsbeispiel wird nun weiter unter Zuhilfenahme von Fig. 2 beschrieben. Fig. 2 zeigt einen Sender SEN des Telekommunikationssystem aus Fig. 1. Die Übertragung der Datenströme erfolgt z.B. im MPEG Format; MPEG = Motion Picture Expert Group. Der Sender SEN enthält z.B. acht Module 1, 2, 3, 4, 5, 6, 7, 8 die zur Generierung eines Datenstroms, beinhaltend Empfänger-spezifische Daten, dienen. So ist Modul 1 z.B. vorgesehen, um die Datenstruktur der Datenquelle an das MPEG Datenformat einschließlich Synchronisierungsbytes anzupassen.

Modul 2 enthält einen Zufallsgenerator, um das Ausgangsspektrum des Datenstroms zu beeinflussen.

Modul 3 enthält einen Reed-Solomon Kodierer, um den Datenstrom zu kodieren und auf der Empfangseite eine definierte Fehlerkorrektur durchführen zu können.

Modul 4 enthält einen Verwürfler, um benachbarte Informationseinheiten (z.B. Bytes) über einen größeren Bereich zu verstreuen und damit die Leistungsfähigkeit der Reed Solomon Kodierung zu erhöhen.

Modul 5 enthält einen Konverter, der den fortlaufenden Datenstrom in m-Tuple unterteilen soll, die dann z.B. mittels QAM modulierbar sind; QAM = Quadratur Amplituden Modulation.

Modul 6 enthält einen Kodierer, der die Aufgabe hat, eine Differenzkodierung durchzuführen.

Modul 7 enthält einen Filter zur Filterung des Datenstroms.

Modul 8 enthält einen QAM Modulator zur Durchführung der QAM Modulation.

Das Ausführungsbeispiel wird nun weiter unter Zuhilfenahme von Fig. 3 beschrieben. Fig. 3 zeigt einen Empfänger EMP des Telekommunikationssystem aus Fig. 1. Der Empfänger EMP enthält z.B. acht Module 1', 2', 3', 4', 5', 6', 7', 8' die zur Wiedergewinnung von Empfänger-spezifischen Daten aus den vom Sender generierten und übertragenen Datenstrom dienen. Die Module 1', 2', 3', 4', 5', 6', 7', 8' führen die entsprechenden inversen Datenverarbeitungen durch.

Modul 8' enthält dazu einen QAM Demodulator zur Durchführung der QAM Demodulation.

Modul 7' enthält einen Filter zur Filterung des Datenstroms.

Modul 6' enthält einen Dekodierer, der die Aufgabe hat, eine Differenzdekodierung durchzuführen.

Modul 5' enthält einen Konverter, der m-Tuple in einen fortlaufenden Datenstrom umwandeln soll.

Modul 4' enthält einen Entwürfler, um den Datenstrom zu entwürfern.

Modul 3' enthält einen Reed-Solomon Dekodierer, um eine definierte Fehlerkorrektur durchzuführen.

Modul 2' enthält einen Zufallsgenerator, um die Beeinflussung des Ausgangsspektrums des Datenstroms durch Modul 2 rückgängig zu machen.

Modul 1' ist vorgesehen, um das MPEG Datenformat einschließlich Synchronisierungsbytes an die Datenstruktur der Datensenke anzupassen.

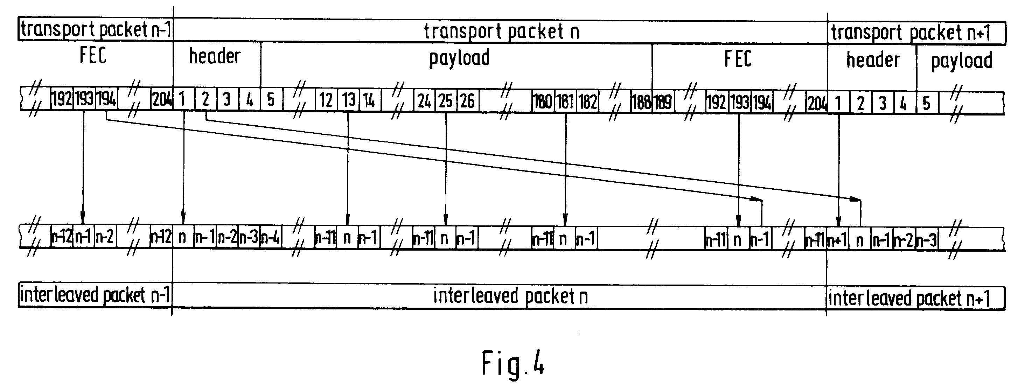

Das Ausführungsbeispiel wird nun weiter unter Zuhilfenahme von Fig. 4 beschrieben. Fig. 4 zeigt einen Ausschnitt eines vom Sender zu den Empfängern zu übertragenden Datenstroms. Der Datenstrom enthält Datenpakete, die jeweils aus 204 Bytes bestehen. Jedes Datenpaket enthält ein Kopfteil, den sog. Header, der z.B. 4 Bytes beinhaltet und zur Übertragung von Steuerinformationen vorgesehen ist. Jedes Datenpaket enthält ferner eine sog. payload, die 184 Bytes beinhaltet und in der Empfänger-spezifische Nutzdaten übertragen werden. Optional enthält jedes Datenpaket 16 Bytes, die zur sog. forward error correction dienen. Dieser Datenstrom wird im Modul 4 verwürfelt, wobei die Daten eines Datenpakets auf zwölf aufeinanderfolgende Datenpakete aufgeteilt werden, wodurch auf der Empfangsseite mindestens zwölf Datenpakete empfangen werden müssen, um die gesamte Information eines bestimmten Datenpakets wiedergewinnen zu können.

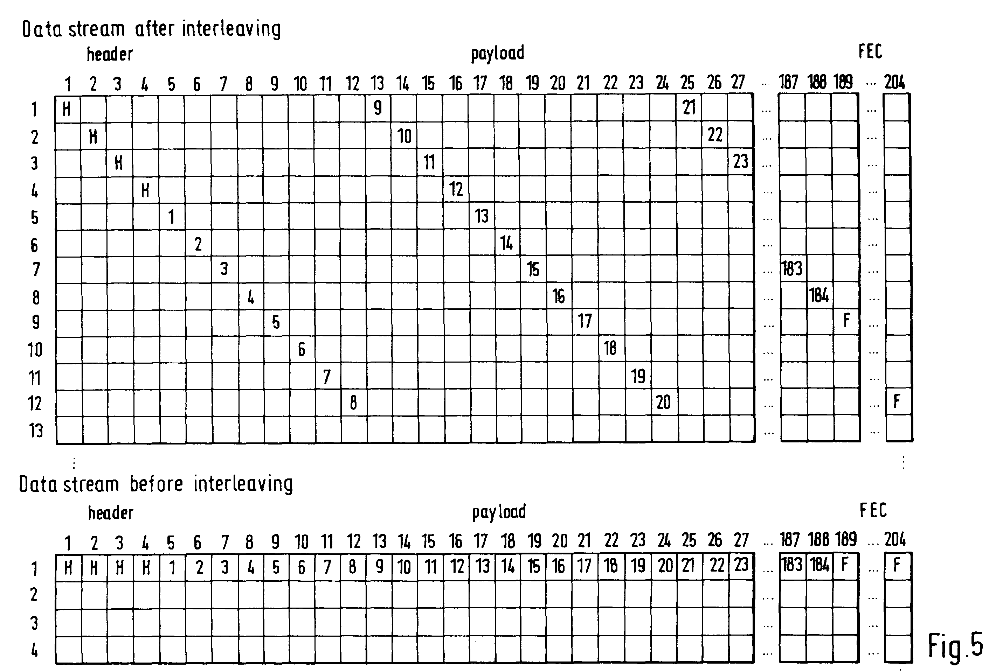

In Fig. 5 ist der Ausschnitt aus dem Datenstrom aus Fig. 4 vergrößert dargestellt und durch die graphische Darstellung die Positionierung der einzelnen, einem Datenpaket zugehörigen Bytes verdeutlicht.

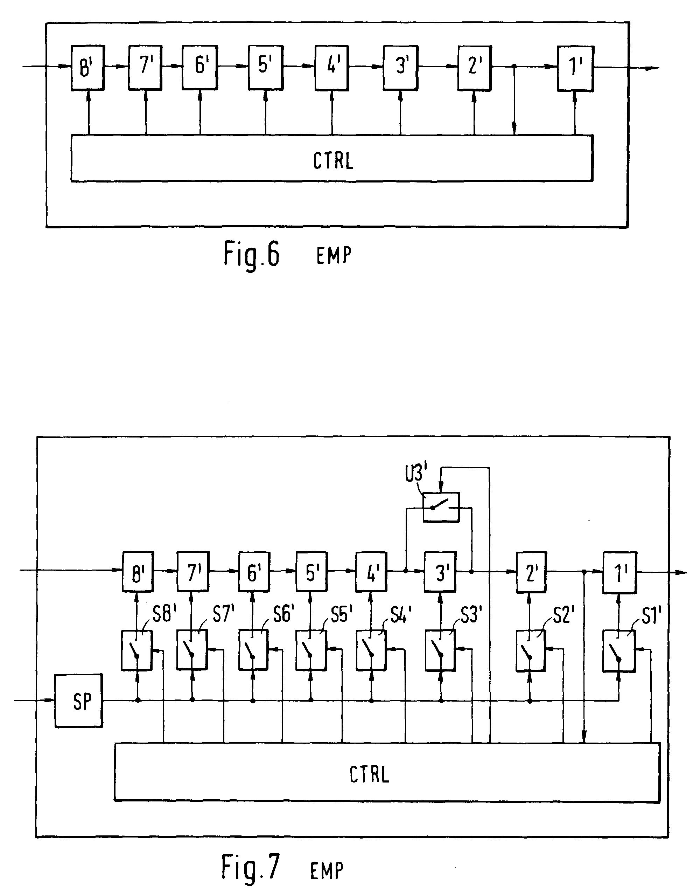

Das Ausführungsbeispiel wird nun weiter unter Zuhilfenahme von Fig. 6 beschrieben. Fig. 6 zeigt einen erfindungsgemäßen Empfänger EMP zur Verwendung in einem Telekommunikationssystem aus Fig.1. Der Empfänger EMP beinhaltet die aus Fig. 3 bekannten Module 1', 2', 3', 4', 5', 6', 7', 8' zur Durchführung der entsprechenden inversen Datenverarbeitungen zur Wiedergewinnung der für den Empfänger bestimmten Daten aus dem empfangenen Datenstrom eines Senders. Zusätzlich enthält der Empfänger EMP eine Steuereinheit CTRL.

Die Steuereinheit CTRL dient zur Steuerung der Leistungsaufnahme der Module 1', 2', 3', 4', 5', 6', 7', 8'. Die Steuereinheit CTRL ist geeignet, in einem Leistungssparmodus die Leistungsaufnahmen der Module 1', 2', 3', 4', 5', 6', 7', 8' zu reduzieren und die Leistungsaufnahmen der Module 2', 3', 4', 5', 6', 7', 8' nur in vorgegebenen Zeiträumen jeweils auf einen vorgegebenen Wert einzustellen, um in den vorgegebenen Zeiträumen vorgegebene Abschnitte des empfangenen Datenstroms zu überwachen. Die Steuereinheit CTRL ist ferner geeignet, bei Detektion einer vorgegebenen Kennung die Leistungsaufnahmen aller Module 1', 2', 3', 4', 5', 6', 7', 8' jeweils auf einen vorgegebenen Wert einzustellen. Die Steuerung der Leistungsaufnahme erfolgt z.B. durch zeitweises An- und Abschalten der Betriebsspannung für einzelne der Module 1', 2', 3', 4', 5', 6', 7', 8'.

Die Steuereinheit CTRL ist beispielsweise als Prozessor oder als reprogrammierbarer Baustein ausgeführt ist. Als Prozessor kann z.B. ein Mikroprozessor oder ein DSP verwendet werden; DSP = Digital Signal Processor. Als reprogrammierbarer Baustein kann z.B. ein FPGA oder ein CPLD verwendet werden; FPGA = Field Programmable Gate Array, CPLD = Complex Programmable Logic Device. Die Abfolge der An- und Abschaltung der Betriebsspannung einzelner Module wird per Software in die Steuereinheit CTRL implementiert.

Im Leistungssparmodus wird z.B. die Betriebsspannung des Moduls 1' während der gesamten Zeit abgeschaltet, auch in den Zeiträumen, in denen die Betriebsspannung der Module 2', 3', 4', 5', 6', 7', 8' zur Überwachung des empfangenen Datenstroms angeschaltet wird, da zur Detektion der Kennung das Modul 1' nicht notwendig ist. Das Modul 1' führt lediglich eine Protokollanpassung durch, so daß die Eingangsdaten des Moduls 1' bereits die nötigen Informationen zur Detektion der Kennung unverschlüsselt enthalten. Die Steuereinheit CTRL ist daher mit dem Ausgang des Moduls 2' verbunden. Der Ausgang des Moduls 2' wird durch die Steuereinheit CTRL in vorgegebenen Zeiträumen überwacht. Bei Detektion einer vorgegebenen Kennung schaltet die Steureinheit CTRL z.B. die Betriebsspannung aller Module 1', 2', 3', 4', 5', 6', 7', 8' an, damit der Empfänger EMP die nachfolgenden Empfänger-spezifischen Daten empfangen kann. Der Empfänger arbeitet dann im Normalmodus.

Im Leistungssparmodus wie im Normalmodus bleibt z.B. die Betriebsspannung für die nicht dargestellte Synchronisationsschaltung stets angeschaltet, da durch das An- und Abschalten die Synchronisation zeitweise verloren gehen würde und eine neue Aufsynchronisation zuviel Zeit benötigen würde.

Der ausgesendete Datenstrom eines Senders des Telekommunikationssystems aus Fig. 1 beinhaltet Datenpakete, die jeweils ein Kopfteil und eine payload mit Empfänger-spezifische Daten aufweisen. Die zu überwachenden vorgegebenen Abschnitte befinden sich für jeden Empfänger in den für den jeweiligen Empfänger bestimmten Daten. Die Empfänger-spezifischen Daten können jeweils auch aus einem Kopfteil unf einer payload aufgebaut sein. In diesem Fall können sich die zu überwachenden Abschnitte in den Kopfteilen der für den jeweiligen Empfänger bestimmten Daten befinden. Dies hat den Vorteil, daß nur die Kopfteile und nicht die zeitlich längeren payloads überwacht werden müßten, wodurch wiederum Strom gespart werden könnte.

Jedem Empfänger des Telekommunikationssystems aus Fig. 1 ist eine Empfänger-spezifische Adresse zugeordnet. Die Kennung für einen spezifischen Empfänger enthält beispielsweise die Adresse des jeweiligen Empfängers. Die Steuereinheit CTRL des Empfänger EMP überwacht daher, ob sich an einer vorgegebenen Stelle im Datenstrom die Adresse des spezifischen Empfängers befindet. Detektiert sie diese Adresse, so schaltet sie auf Normalbetrieb und dazu z.B. die Betriebsspannung aller Module an. Der Sender überträgt vor des Aussendung von Empfänger-spezifischen Daten an einer vorgegebenen Stelle im Datenstrom die Kennung des spezifischen Empfängers, um sicherzugehen, daß der entsprechende Empfänger die Kennung detektiert und vom Leistungssparmodus in den Normalmodus umschaltet. Erst danach wird mit der Aussendung der Empfänger-spezischen Daten begonnen. Dadurch wird erreicht, daß für die in der Regel langen Zeiträume, in denen für den jeweiligen Empfänger keine Daten vorliegen, der jeweilige Empfänger im Leistungsparmodus betrieben wird und somit nur eine sehr geringe Leistung benötigt, nämlich nur in den relativ kurzen Zeiträumen, in denen er den Datenstrom überwacht, um herauszufinden, ob seine Kennung gesendet wird. Alternativ kann zwischen Sender und Empfängern auch vereinbart werden, zu welchen Zeitpunkten der Sender Kennungen zu welchem Empfänger sendet. Dann kann auf die wiederholte Aussendung der Kennung verzichtet werden, da der Sender die mit den Empfängern abgestimmten Zeitpunkte kennt und nur zu diesen Zeitpunkten Kennungen aussendet, so daß er sichergehen kann, daß der jeweilige Empfänger empfangsbereit ist.

Die vom Empfänger EMP im Leistungssparmodus zu überwachenden vorgegebenen Zeiträume haben jeweils z.B. mindestens die Dauer einer Kennung, um diese detektieren zu können. Die Zeiträume zwischen den vorgegebenen Zeiträumen haben z.B. die Dauer von 11x12=121 Datenpaketen. Wenn, wie im vorliegenden Ausführungsbeispiel, der Sender einen Verwürfler beinhaltet, der Daten eines Datenpakets verwürfelt, so daß in jedem Empfänger ein Entwürfler benötigt wird, der Daten des empfangenen Datenpakets entwürfelt, und somit erst nach Erhalt von zwölf Datenpaketen die gesamte Information eines Datenpakets vorliegt, so ist jeder vorgegebene Zeitraum in der Regel auf zwölf Datenpakete auszuweiten. Der vorgegebene Zeitraum ist somit angepaßt an die vorliegenden Umstände möglichst minimal zu wählen, um möglichst viel Leistung einzusparen. Im vorliegenden Ausführungsbeispiel ist die Steuereinheit CTRL geeignet, im Leistungssparmodus die Betriebsspannung des Entwürflers in den vorgegebenen Zeiträumen anzuschalten.

Der Abschnitt innerhalb eines Datenpakets, in dem die Kennung übertragen wird, wird durch den Sender in Abstimmung mit den Empfängern vorgegeben. Durch geeignete Wahl eines besonders einfach zu detektierenden Abschnitts kann der Zeitraum zur Überwachung des Datenpakets trotz Verwürfelung z.B. auf ein Datenpaket reduziert werden, wenn nur in diesen Abschnitten der entsprechende Kopteil enthalten ist, während die payload in allen zwölf aufeinanderfolgenden Datenpaketen enthalten ist.

Die vom Sender ausgesendete Kennung kann wie bereits weiter oben beschrieben, für jeden Empfänger eine spezifische Kennung sein, z.B. unterscheidbar durch die unterschiedlichen Adressen der Empfänger. Dies ist z.B. vonnöten, wenn Empfänger-spezifische Daten übertragen werden. Empfänger-spezifische Daten sind z.B. Telefonsignale. Das Telekommunikationssystem dient trotz des Aufbaus als Verteilnetz mit Rückkanal und als hybrides Faser/Koaxialkabelnetz auch als Telefonnetz, dem sog. cablephone. Allerdings gelangen alle vom Sender ausgesendeten Daten zu allen Empfängern, so daß für jeden Empfänger eine unterschiedliche Kennung erforderlich ist. Für Empfänger-unabhängige Dienste, z.B. Software download, kann eine für alle Empfänger gleiche Kennung verwendet werden. Die Steuereinheit CTRL des Empfängers EMP wird daher so programmiert, daß sie sowohl die Empfänger-spezifische Kennung als auch die für alle Empfänger gleiche Kennung detektieren kann.

Das Ausführungsbeispiel wird nun weiter unter Zuhilfenahme von Fig. 7 beschrieben. Fig. 7 zeigt eine Ausführungsform des erfindungsgemäßen Empfänger aus Fig. 6.

Der Empfänger EMP beinhaltet zusätzlich zu den zu Fig. 3 und 6 beschriebenen Modulen und der Steuereinheit eine Spannungsquelle SP und acht Schalter S1', S2', S3', S4', S5', S6', S7', S8'. Die Spannungsquelle SP ist mit jedem Modul 1', 2', 3', 4', 5', 6', 7', 8' über einen Schalter S1', S2', S3', S4', S5', S6', S7', S8' verbunden. Jeder Schalter S1', S2', S3', S4', S5', S6', S7', S8' wird von der Steuereinheit CTRL angesteuert. Anstelle jedes Modul 1', 2', 3', 4', 5', 6', 7', 8' über einen separaten Schalter S1', S2', S3', S4', S5', S6', S7', S8' anzusteuern, können auch über einen Schalter mehreren Module gleichzeitig angesteuert werden. Z.B. reicht für die Ansteuerung der Module 2', 4', 5', 6', 7', 8' ein Schalter aus, da diese Module stets gleichzeitig an- bzw. abgeschaltet. Dies reduziert die Anzahl der Schalter.

Die Spannungsquelle SP wird über das Telekommunikationsnetz ferngespeist oder über eine separate, vom Telekommunikationsnetz unabhängigen Stromversorgungsleitung gespeist. Für die Notstromversorgung beinhaltet die Spannungsquelle SP eine Batterie.

Die Spannungsquelle SP liefert die Stromversorgung für alle Module 1', 2', 3', 4', 5', 6', 7', 8'. Die Betriebsspannung wird durch die Steuereinheit CTRL über die Schalter S1', S2', S3', S4', S5', S6', S7', S8' für jedes Modul 1', 2', 3', 4', 5', 6', 7', 8' separat an- und abgeschaltet. Im Normalmodus ist die Betriebsspannung für alle Module 1', 2', 3', 4', 5', 6', 7', 8'angeschaltet. Im Leistungssparmodus ist die Betriebsspannung für alle Module 1', 2', 3', 4', 5', 6', 7', 8' abgeschaltet; lediglich in den vorgegebenen Zeiträumen wird die Betriebsspannung für die Module 2', 3', 4', 5', 6', 7', 8'angeschaltet.

Modul 3' ist für die Detektion einer Kennung nicht zwingend erforderlich. Es führt eine definierte Fehlerkorrektur nach dem Reed-Solomon Algorithmus durch. Um noch mehr Leistung einzusparen, kann daher z.B. die Betriebsspannung des Moduls 3' auch in den vorgegebenen Zeiträumen im Leistungssparmodus abgeschaltet werden. Modul 3' beinhaltet dazu einen Eingang und einen Ausgang sowie eine Eingang und Ausgang verbindende, schaltbare Überbrückungsschaltung U3'. Die Steuereinheit CTRL ist derart programmiert, daß sie geeignet ist, den Eingang des Moduls 3' über den Schalter der Überbrückungsschaltung U3' mit dessen Ausgang zu verbinden, wenn die Betriebsspannung des Moduls 3' abgeschaltet ist. Die Kette der Module 2', 3', 4' ist somit auch während des Leistungssparmodus nicht unterbrochen. Die Steuereinheit CTRL überwacht weiterhin den Ausgang von Modul 2'.

Die Steuereinheit CTRL wird derart programmiert, daß sie geeignet ist, nach Beendigung der Übertragung der Empfänger-spezifischen Daten automatisch in den Leistungssparmodus zu schalten. Dadurch wird eine maximale Leistungsreduktion erreicht.

Der Empfänger EMP ist z.B. als MPEG-2 Empfänger ausgeführt, so daß er für den Empfang von Signalen in DVB- und/oder DAB-Netzen geeignet ist; DVB = Digital Video Broadcasting, DAB = Digital Audio Broadcasting.

## Patentansprüche

1. Empfänger (EMP) eines Telekommunikationsnetzes (NET), das zur Übertragung von einem Datenstrom von einem Sender (SEN) zu einer Vielzahl von Empfängern (EMP) dient, wobei der Datenstrom Empfänger-spezifische Daten enthält,
**dadurch gekennzeichnet,**
daß der Empfänger (EMP) mindestens ein Modul (1', 2', 3', 4', 5', 6', 7', 8') zur Wiedergewinnung der für den Empfänger (EMP) bestimmten Daten aus dem empfangenen Datenstrom und eine Steuereinheit (CTRL) zur Steuerung der Leistungsaufnahme des mindestens einen Moduls (1', 2', 3', 4', 5', 6', 7', 8') beinhaltet, daß die Steuereinheit (CTRL) geeignet ist, in einem Leistungssparmodus die Leistungsaufnahme des mindestens einen Moduls (1', 2', 3', 4', 5', 6', 7', 8') zu reduzieren und die Leistungsaufnahme mindestens eines der Module (1', 2', 3', 4', 5', 6', 7', 8') nur in vorgegebenen Zeiträumen auf einen vorgegebenen Wert einzustellen, um in den vorgegebenen Zeiträumen vorgegebene Abschnitte des empfangenen Datenstroms zu überwachen, und daß die Steuereinheit (CTRL) geeignet ist, bei Detektion einer vorgegebenen Kennung die Leistungsaufnahmen aller Module (1', 2', 3', 4', 5', 6', 7', 8') jeweils auf einen vorgegebenen Wert einzustellen.

2. Empfänger (EMP) nach Anspruch 1, dadurch gekennzeichnet, daß der Empfänger (EMP) eine Spannungsquelle (SP) und mindestens einen Schalter (S1', S2', S3', S4', S5', S6', S7', S8') beinhaltet, daß die Spannungsquelle (SP) über den mindestens einen Schalter (S1', S2', S3', S4', S5', S6', S7', S8') mit jedem Modul (1', 2', 3', 4', 5', 6', 7', 8') verbunden ist, und daß jeder Schalter (S1', S2', S3', S4', S5', S6', S7', S8') von der Steuereinheit (CTRL) angesteuert wird.

3. Empfänger (EMP) nach Anspruch 2, dadurch gekennzeichnet, daß mindestens eines (3') der Module (1', 2', 3', 4', 5', 6', 7', 8') einen Eingang und einen Ausgang sowie eine Eingang und Ausgang verbindende, schaltbare Überbrückungsschaltung (U3') beinhaltet, und daß die Steuereinheit (CTRL) geeignet ist, den Eingang des mindestens einen Moduls (3') mit Überbrückungsschaltung (U3') mit dessen Ausgang zu verbinden, wenn die Leistungsaufnahme des mindestens einen Moduls (3') mit Überbrückungsschaltung (U3') reduziert ist.

4. Empfänger (EMP) nach Anspruch 3, dadurch gekennzeichnet, daß die Spannungsquelle über das Telekommunikationsnetz (NET) ferngespeist wird oder über eine separate, vom Telekommunikationsnetz (NET) unabhängigen Stromversorgungsleitung gespeist wird und für die Notstromversorgung eine Batterie beinhaltet.

5. Empfänger (EMP) nach Anspruch 1, dadurch gekennzeichnet, daß die Steuereinheit (CTRL) geeignet ist, nach Beendigung der Übertragung der für den Empfänger (EMP) bestimmten Daten automatisch in den Leistungssparmodus zu schalten.

6. Empfänger (EMP) nach Anspruch 1, dadurch gekennzeichnet, daß der Empfänger (EMP) als MPEG-2 Empfänger ausgeführt ist.

7. Empfänger (EMP) nach Anspruch 1, dadurch gekennzeichnet, daß die Steuereinheit (CTRL) als Prozessor oder als reprogrammierbarer Baustein ausgeführt ist.

8. System (SYS) beinhaltend einen Sender (SEN), ein Telekommunikationsnetz (NET) und eine Vielzahl von Empfängern (EMP), wobei jeder Empfänger als Empfänger (EMP) gemäß Anspruch 1 ausgeführt ist.

9. System (SYS) nach Anspruch 8, dadurch gekennzeichnet, daß der Datenstrom des Senders (SEN) Datenpakete beinhalten, die jeweils einen Kopfteil und Empfänger-spezifische Daten aufweisen, und daß sich die zu überwachenden vorgegebenen Abschnitte in den für den Empfänger (EMP) bestimmten Daten befinden.

10. System (SYS) nach Anspruch 9, dadurch gekennzeichnet, daß jeder Empfänger (EMP ) eine Empfänger-spezifische Adresse hat, und daß die Kennung für einen spezifischen Empfänger (EMP) die Adresse des jeweiligen Empfängers (EMP) beinhaltet und in mindestens zwölf aufeinanderfolgenden Datenpaketen jeweils in den für den Empfänger (EMP) bestimmten Daten übertragen wird.

11. System (SYS) nach Anspruch 9, dadurch gekennzeichnet, daß die von einem Empfänger (EMP) im Leistungssparmodus zu überwachenden vorgegebenen Zeiträume jeweils mindestens die Dauer einer Kennung haben.

12. System (SYS) nach Anspruch 8, dadurch gekennzeichnet, daß das Telekommunikationsnetz (NET) als Verteilnetz mit Rückkanal und/oder als hybrides Faser/KoaxialkabeInetz ausgeführt ist.

13. System (SYS) nach Anspruch 8, dadurch gekennzeichnet, daß jeder Sender (SEN) einen Verwürfler (4) beinhaltet, der Daten eines Datenpakets verwürfelt, und daß in jedem Empfänger (EMP) ein Modul (1', 2', 3', 4', 5', 6', 7', 8') einen Entwürfler (4') beinhaltet, der Daten eines Datenpakets entwürfelt, und daß die Steureinheit (CTRL) geeignet ist, im Leistungssparmodus die Leistungsaufnahme des Entwürflers (4') in den vorgegebenen Zeiträumen auf einen vorgegebenen Wert einzustellen.

14. System (SYS) nach Anspruch 9, dadurch gekennzeichnet, daß die Empfänger-spezifischen Daten Telefonsignale beinhalten.

15. System (SYS) nach Anspruch 8, dadurch gekennzeichnet, daß der Empfänger (EMP) als Cable Modem oder als Set-Top Box ausgeführt ist.
